# EUROPÄISCHE PATENTSCHRIFT

(11) **EP 3 791 706 B1**
(45) Veröffentlichungstag und Bekanntmachung des Hinweises auf die Patenterteilung: **28.06.2023**
(21) Anmeldenummer: 20195400.5
(22) Anmeldetag: 10.09.2020
(51) Int. Cl.: A01B 63/10, A01B 73/02, A01B 73/04, A01D 78/10

(54) **LANDWIRTSCHAFTLICHE ARBEITSMASCHINE MIT HÖHENVERÄNDERBAREM ARBEITSWERKZEUG**
AGRICULTURAL WORKING MACHINE WITH A HEIGHT-ADJUSTABLE WORKING TOOL
MACHINE DE TRAVAIL AGRICOLE POURVUE D'OUTIL DE TRAVAIL RÉGLABLE EN HAUTEUR

(30) Priorität: 13.09.2019 DE 102019006469
(43) Veröffentlichungstag der Anmeldung: 17.03.2021
(73) Patentinhaber: Maschinenfabrik Bernard Krone GmbH & Co. KG, 48480 Spelle (DE)
(72) Erfinder: Speller, Simon, 48496 Hopsten (DE); Mersch, Jürgen, 49509 Recke (DE); Helper, Erik, 48465 Quendorf (DE)

(56) Entgegenhaltungen:
- EP-A1- 3 092 887
- EP-A1- 3 254 546
- EP-A2- 1 405 556
- EP-B1- 3 092 887
- EP-B1- 3 254 546
- DE-A1-102014 018 133
- DE-B4-102014 018 133

## Beschreibung

Die vorliegende Erfindung betrifft eine landwirtschaftliche Arbeitsmaschine zum frontseitigen oder heckseitigen Anordnen an ein Zugfahrzeug, mit einem Rahmen, an dem ein Arbeitsorgan angeordnet ist, das einen Ausleger und mindestens ein Arbeitswerkzeug umfasst, wobei das Arbeitswerkzeug an dem Ausleger angeordnet ist, und der Ausleger längenveränderlich ist, so dass eine Arbeitsposition des Arbeitswerkzeugs gegenüber dem Rahmen von einer eingefahrenen Arbeitsposition in eine ausgefahrene Arbeitsposition veränderbar ist, wobei der Ausleger mit einem Aktor um eine Schwenkachse in und gegen eine Schwenkrichtung verschwenkbar ist, so dass das Arbeitswerkzeug reversibel von einer Betriebsstellung in eine angehobene Stellung anhebbar ist, wobei die Arbeitsmaschine einen Sensor zur Erfassung einer Höhe des mindestens einen Arbeitswerkzeugs sowie eine Auswert- und Steuerungseinheit zum Steuern des Aktors umfasst.

Eine Arbeitsbreite von Heuwerbungsmaschinen wie beispielsweise Kreiselschwadern ist durch Ein- und Ausfahren der Rechkreisel veränderbar, um eine Schwadbreite einzustellen. Um im Vorgewende einen Schwad nicht ungewollt erneut zu bearbeiten, sind die Rechkreisel zudem im Betrieb der Heuwerbungsmaschine von einer Betriebsstellung, in der sie am Boden bodenkopierend geführt sind, in eine Vorgewendestellung anhebbar. Dabei können die Rechkreisel bei ausgefahrener Position des längenveränderlichen Auslegers etwa 20cm - 50cm höher angeordnet sein, als bei eingefahrener Position.

Um die Arbeit nach dem Vorgewende schnell wieder aufnehmen zu können, werden die Rechkreisel möglichst schnell wieder abgesenkt. Dabei werden sie nach einem festen Zeitversatz abgebremst, damit sie beim Aufsetzen nicht beschädigt werden.

Jedoch ist ein Schwenkwinkel, den ein Rechkreisel von der Vorgewendestellung in die Betriebsstellung verschwenkt werden muss, bei eingefahrenem Rechkreisel größer als bei ausgefahrenem Rechkreisel. Zudem wird zum Anheben und Absenken häufig ein hydraulischer Zylinder genutzt. Beim Absenken muss die Hydraulikflüssigkeit aus dem Zylinder gedrückt werden. Aufgrund des langen Hebelarms ist das bei ausgefahrenem Rechkreisel leichter als bei eingefahrenem Rechkreisel.

Daher ist die Zeit, die ein Rechkreisel zum Verstellen von der Vorgewendestellung in die Betriebsstellung benötigt, umso länger, je weiter der Rechkreisel eingefahren ist.

Die Druckschrift EP 3 254 546 A1 offenbart eine Landmaschine mit einem Tragrahmen, an welchem wenigstens ein Arbeitsgerät über einen Hubarm aus einer abgesenkten Arbeitsstellung am Boden über eine vom Boden angehobene Vorgewendestellung bis in eine voll ausgehobene Transportstellung und umgekehrt verstellbar ist.

Die Druckschrift DE 10 2014 018 133 A1 offenbart eine Heuwerbungsmaschine , die mit Rechkreiseln ausgestattet ist, welche an einem Tragrahmen angeordnet sind und über hydraulische Kolben-Zylindereinheiten aus einer etwa horizontalen, bodennahen Arbeits- und Betriebsstellung in eine bodenferne Vorgewende- oder Transportstellung und zurück überführbar sind.

Aufgabe der Erfindung ist es, eine landwirtschaftliche Arbeitsmaschine, insbesondere eine Heuwerbungsmaschine, zu schaffen, bei der eine Zeit zum Absenken eines Arbeitswerkzeugs der Arbeitsmaschine von einer angehobenen Stellung in eine Betriebsstellung unabhängig von einem Abstand des Arbeitswerkzeugs zu einem Rahmen der Arbeitsmaschine im Wesentlichen gleich ist.

Die Aufgabe wird gelöst mit einer landwirtschaftlichen Arbeitsmaschine mit den Merkmalen des unabhängigen Anspruchs 1. Vorteilhafte Ausführungsformen sind den abhängigen Ansprüchen entnehmbar.

Dafür wird eine landwirtschaftliche Arbeitsmaschine geschaffen. Die landwirtschaftliche Arbeitsmaschine ist bevorzugt eine Heuwerbungsmaschine wie beispielsweise ein Kreiselschwader, oder ein Mähwerk. Sie ist zum frontseitigen oder heckseitigen Anordnen an ein Zugfahrzeug vorgesehen.

Sie weist einen Rahmen auf, an dem ein Arbeitsorgan angeordnet ist. Es können aber mehrere Arbeitsorgane am Rahmen angeordnet sein. Vorzugsweise ist eine geradzahlige Anzahl Arbeitsorgane am Rahmen angeordnet. Dabei sind die Arbeitsorgane weiterhin bevorzugt spiegelsymmetrisch am Rahmen angeordnet. Das Arbeitsorgan weist einen Ausleger und ein Arbeitswerkzeug auf, wobei das Arbeitswerkzeug an dem Ausleger angeordnet ist. Der Ausleger ist längenveränderlich. Dadurch kann eine Arbeitsposition des Arbeitswerkzeugs gegenüber dem Rahmen von einer eingefahrenen Arbeitsposition in eine ausgefahrene Arbeitsposition verändert werden.

Zudem ist der Ausleger mit einem Aktor um eine Schwenkachse in und gegen eine Schwenkrichtung verschwenkbar. Dadurch ist das Arbeitswerkzeug reversibel von einer Betriebsstellung in eine angehobene Stellung anhebbar.

Die landwirtschaftliche Arbeitsmaschine weist weiterhin einen Sensor zur Erfassung einer Höhe des Arbeitswerkzeugs sowie eine Auswert- und Steuerungseinheit zum Steuern des Aktors auf.

Die Auswert- und Steuerungseinheit ist dazu ausgebildet,
- die Höhe des Arbeitswerkzeugs zu erfassen,
- eine Winkelgeschwindigkeit des Auslegers beim Verschwenken um die Schwenkachse durch Beaufschlagen des Aktors mit einem Stellwert zu steuern, und
- den Aktor beim Absenken des Arbeitswerkzeugs von der angehobenen Stellung in die Betriebsstellung fortlaufend oder ab Erreichen einer Grenzhöhe mit einem die Winkelgeschwindigkeit verringernden Stellwert zu beaufschlagen.

Indem die Winkelgeschwindigkeit beim Verschwenken des Arbeitswerkzeugs gesteuert wird, kann aktiv auf die für das Verschwenken benötigte Zeit Einfluss genommen werden. Dadurch ist die Zeit, die das Arbeitswerkzeug beim Absenken von einer bestimmten angehobenen Stellung, beispielsweise einer Vorgewendestellung, in die Betriebsstellung benötigt, unabhängig von der Arbeitsposition des Arbeitswerkzeugs, d. h. unabhängig von einer Länge des Auslegers, im Wesentlichen gleich einstellbar. Dafür wird der zum Verschwenken des Arbeitsorgans vorgesehene Aktor mit dem die Winkelgeschwindigkeit verringernden Stellwert beaufschlagt.

In einer ersten erfindungsgemäßen Ausführungsform wird der Aktor fortlaufend mit dem die Winkelgeschwindigkeit verringernden Stellwert beaufschlagt. Dadurch wird die Winkelgeschwindigkeit fortlaufend verringert. Das Arbeitsorgan wird dann beim Absenken fortlaufend abgebremst. Dabei kann der die Winkelgeschwindigkeit verringernde Stellwert ein konstanter Wert sein. Es ist aber ebenfalls bevorzugt, dass sich der die Winkelgeschwindigkeit verringernde Stellwert ändert.

Das Arbeitswerkzeug soll einerseits möglichst schnell von der angehobenen Stellung in die Betriebsstellung verstellt werden. Andererseits soll weder das Arbeitswerkzeug noch die Grasnarbe beim Erreichen der Betriebsstellung beschädigt werden. Daher ist es bevorzugt, dass der die Winkelgeschwindigkeit verringernde Stellwert in Bodennähe größer ist als fernab vom Boden. In einer bevorzugten Ausführungsform wird die Winkelgeschwindigkeit stärker verringert, wenn sich das Arbeitswerkzeug dem Boden nähert. Besonders bevorzugt wird sie umso geringer, je näher das Arbeitswerkzeug dem Boden ist. Der die Winkelgeschwindigkeit verringernde Stellwert ändert sich daher bei dieser Ausführungsform bei Annäherung zum Boden. Dabei kann er sich stetig, diskret oder stufenweise ändern. Bei einer stufenweisen Änderung ist es jedoch bevorzugt, dass eine ruckartige Verringerung der Geschwindigkeit vermieden wird, um eine Beschädigung des Arbeitswerkzeugs zu verhindern.

Um ein möglichst schnelles Verstellen in die Betriebsstellung zu ermöglichen, ist es in einer zweiten erfindungsgemäßen Ausführungsform vorgesehen, dass das Arbeitswerkzeug erst ab Erreichen einer Grenzhöhe mit dem die Winkelgeschwindigkeit verringernden Stellwert beaufschlagt wird. Dadurch sinkt es bis zum Erreichen der Grenzhöhe mit größtmöglicher Geschwindigkeit ab. In dieser Ausführungsform ist daher die Zeit zum Absenken des Arbeitswerkzeugs gegenüber der ersten Ausführungsform verringert und optimiert. Erst ab Erreichen des Grenzwertes wird das Arbeitsorgan fortlaufend abgebremst. Auch in dieser Ausführungsform kann der die Winkelgeschwindigkeit verringernde Stellwert ein konstanter Wert sein. Ebenfalls bevorzugt kann er sich ab dem Erreichen der Grenzhöhe ändern. Es gelten hierzu die obigen Ausführungen zur ersten Ausführungsform analog.

Der die Winkelgeschwindigkeit verringernde Stellwert ist bevorzugt ein Dämpfungswert. Im Folgenden werden die Begriffe die Winkelgeschwindigkeit verringernder Stellwert und Dämpfungswert synonym verwendet. Bei konstantem, die Winkelgeschwindigkeit verringerndem Stellwert ist eine Dämpfung der Schwenkbewegung des Arbeitsorgans konstant. Bei einem sich verändernden die Winkelgeschwindigkeit verringernden Stellwert wird die Intensität der Dämpfung verändert. Das Arbeitsorgan wird dann in Abhängigkeit von der Intensität der Dämpfung stärker oder weniger stark abgebremst.

Bevorzugt ändert sich der die Winkelgeschwindigkeit verringernde Stellwert in Abhängigkeit von einem oder mehreren Einflussfaktoren. Dadurch ändert sich die Winkelgeschwindigkeit in Abhängigkeit von dem oder den Einflussfaktoren. Die Stärke, mit der das Arbeitswerkzeug abgebremst wird, ändert sich dann entsprechend dem oder den Einflussfaktoren. Ein Einflussfaktor kann beispielsweise ein Erntegutparameter, ein Parameter der Arbeitsmaschine oder ein Betriebsparameter sein.

Zudem weist die landwirtschaftliche Arbeitsmaschine einen Sensor zur Erfassung der Arbeitsposition des Arbeitswerkzeugs auf.

Die landwirtschaftliche Arbeitsmaschine zeichnet sich dadurch aus, dass die Auswert- und Steuerungseinheit dazu ausgebildet ist, die Arbeitsposition des Arbeitswerkzeugs zu erfassen, und den die Winkelgeschwindigkeit verringernden Stellwert und/oder die Grenzhöhe abhängig von der Arbeitsposition des Arbeitswerkzeugs einzustellen. Daher ist der Einflussfaktor ein Parameter der Arbeitsmaschine, nämlich die Arbeitsposition des Arbeitswerkzeugs.

Bei eingefahrener Arbeitsposition ist ein Schwenkwinkel, um den das Arbeitsorgan um die Schwenkachse verschwenkt werden muss, um von der angehobenen Stellung in die Betriebsstellung verschwenkt zu werden, größer, als bei ausgefahrener Arbeitsposition. Zudem kann sich ein umso längerer Hebelarm bei ausgefahrener Arbeitsposition beschleunigend auswirken, wenn als Aktor ein hydraulischer Zylinder genutzt wird und beim Absenken des Arbeitswerkzeugs Hydraulikflüssigkeit in einen Zylinder zurück gedrückt werden muss. Gegenüber einer ausgefahrenen Arbeitsposition dauert das Absenken dann daher bei eingefahrener Arbeitsposition länger.

Weiterhin zeichnet sich die landwirtschaftliche Arbeitsmaschine dadurch aus, dass die benötigte Zeit zum Absenken des Arbeitswerkzeugs unabhängig von der Arbeitsposition des Arbeitswerkzeugs im Wesentlichen gleich ist. Indem die Arbeitsposition des Arbeitswerkzeugs erfasst wird, können der die Winkelgeschwindigkeit verringernde Stellwert und/oder die Grenzhöhe in Abhängigkeit von der Arbeitsposition so eingestellt werden.

Dabei ist es besonders bevorzugt, dass die Grenzhöhe in der eingefahrenen Arbeitsposition bodennäher als in der ausgefahrenen Arbeitsposition ist. Dadurch kann das Arbeitswerkzeug bei eingefahrener Arbeitsposition länger schneller absinken, bevor es abgebremst wird. Danach kann es, um die Betriebsstellung dennoch ausreichend sachte zu erreichen und um keine Beschädigungen am Arbeitswerkzeug zu verursachen, ab dem Erreichen der Grenzhöhe stärker abgebremst werden. Vorzugsweise wird das Arbeitswerkzeug umso stärker abgebremst, je später die Grenzhöhe erreicht ist.

In einer bevorzugten Ausführungsform umfasst die landwirtschaftliche Arbeitsmaschine einen Regelkreis zum Regeln des die Winkelgeschwindigkeit verringernden Stellwerts. Bei einer solchen Regelung kann ein, insbesondere weitere Einflussfaktoren berücksichtigender, elektrischer Regelkreis verwendet werden. Dabei ist es bevorzugt, dass eine Sollgeschwindigkeit vorgegeben wird und die aktuelle Winkelgeschwindigkeit mittels des die Winkelgeschwindigkeit verringernden Stellwerts geregelt wird.

In dieser Ausführungsform ist es besonders bevorzugt, dass die Auswert- und Steuerungseinheit dazu ausgebildet ist, den die Winkelgeschwindigkeit verringernden Stellwert und/oder die Grenzhöhe abhängig von einer aktuellen Winkelgeschwindigkeit zu regeln. Dadurch wird die Dämpfungsintensität geregelt.

Der Einflussfaktor, nämlich die aktuelle Winkelgeschwindigkeit ist dabei ein Betriebsparameter.

Ebenfalls bevorzugt ist die Auswert- und Steuerungseinheit dazu ausgebildet, den die Winkelgeschwindigkeit verringernden Stellwert und/oder die Grenzhöhe abhängig von einer Fahrgeschwindigkeit der landwirtschaftlichen Arbeitsmaschine einzustellen. Da die landwirtschaftliche Arbeitsmaschine in einer definierten Zeit umso mehr Weg zurücklegt, je größer die Fahrgeschwindigkeit ist, ist es besonders bevorzugt, dass der die Winkelgeschwindigkeit verringernde Stellwert umso kleiner ist. Dadurch kann das Arbeitswerkzeug entsprechend schneller absinken. Dabei ist jedoch eine minimale Dämpfung so bemessen, dass das Arbeitswerkzeug beim Absenken nicht beschädigt wird.

In einer weiteren bevorzugten Ausführungsform umfasst die landwirtschaftliche Arbeitsmaschine zumindest zwei Arbeitsorgane, die an gegenüberliegenden Seiten des Rahmens angeordnet sind. Vorzugsweise sind die beiden Arbeitsorgane spiegelsymmetrisch zu einer die landwirtschaftliche Arbeitsmaschine mittig durchsetzenden Mittelebene angeordnet. In dieser Ausführungsform ist die Auswert- und Steuerungseinheit dazu ausgebildet, den die Winkelgeschwindigkeit verringernden Stellwert und/oder die Grenzhöhe abhängig von einem Neigungswinkel der landwirtschaftlichen Arbeitsmaschine einzustellen. Die Einflussfaktoren, die den die Winkelgeschwindigkeit verringernden Stellwert beeinflussen, sind bei dieser Ausführungsform sowohl Parameter der Arbeitsmaschine als auch Betriebsparameter. Dabei ist es besonders bevorzugt, dass der die Winkelgeschwindigkeit verringernde Stellwert und/oder die Grenzhöhe für jedes der Arbeitsorgane unterschiedlich sein können.

In einer besonders bevorzugten Ausführungsform ist der die Winkelgeschwindigkeit verringernde Stellwert einstellbar. Dafür ist er weiterhin bevorzugt, insbesondere in Abhängigkeit von der Arbeitsposition, voreingestellt. Die Einstellung des die Winkelgeschwindigkeit verringernden Stellwerts kann beispielsweise durch einen Bediener der landwirtschaftlichen Arbeitsmaschine vorgenommen werden. Dabei ist es besonders bevorzugt, dass der Bediener einen die Winkelgeschwindigkeit verringernden Stellwert wählen kann, der zwischen einem maximalen die Winkelgeschwindigkeit verringernden Stellwert und einem minimalen die Winkelgeschwindigkeit verringernden Stellwert liegt. Die Einstellung des maximalen die Winkelgeschwindigkeit verringernden Stellwerts ist bevorzugt so gewählt, dass das Arbeitsgerät auch bei eingefahrener Arbeitsposition noch in die Betriebsstellung absinken kann. Die Einstellung des minimalen die Winkelgeschwindigkeit verringernden Stellwerts ist bevorzugt so gewählt, dass das Arbeitsgerät auch bei ausgefahrener Arbeitsposition beim Absinken in die Betriebsstellung nicht beschädigt wird.

Um die Höhe des Arbeitswerkzeugs zu erfassen, kann als Sensor ein Abstandssensor vorgesehen sein, der eine Abstandsmessung zum Boden ermöglicht. Es ist aber besonders bevorzugt, dass die Höhe anhand eines Winkels, um den der Ausleger gegenüber dem Rahmen um die Schwenkachse verschwenkt ist, erfasst wird. In dieser Ausführungsform wird zudem eine Länge des Auslegers erfasst. Die Länge des Auslegers bestimmt die Arbeitsposition des Arbeitswerkzeugs. Aus diesen Werten kann auf die Höhe des Arbeitswerkzeugs geschlossen werden. Dafür können herkömmliche kostengünstige Sensoren verwendet werden.

Der Aktor ist bevorzugt als Linearaktor ausgebildet. Er ist in einer besonders bevorzugten Ausführungsform ein hydraulischer oder elektrohydraulischer Zylinder, oder ein Linearmotor. Ganz besonders bevorzugt ist er ein elektrohydraulischer Zylinder. Dabei ist der die Winkelgeschwindigkeit verringernde Stellwert bevorzugt ein elektrischer oder ein hydraulischer Stellwert. Prinzipiell ist aber auch ein pneumatischer Zylinder als Aktor verwendbar, wobei der der die Winkelgeschwindigkeit verringernde Stellwert dann ein pneumatischer oder elektrischer Stellwert sein kann.

In der Ausführungsform des Aktors als hydraulischer oder elektrohydraulischer Zylinder ist die Nutzung eines einfach wirkenden Zylinders bevorzugt. Das Beaufschlagen des Aktors mit dem die Winkelgeschwindigkeit verringernden Stellwert kann dann durch Beaufschlagen eines Stellmittels erfolgen. Vorzugsweise wird als Stellmittel ein Druckregelventil genutzt, welches ein Teil der Auswert- und Steuerungseinheit ist. In dieser Ausführungsform kann der die Winkelgeschwindigkeit verringernde Stellwert in eine Pulsweite eines pulsweitenmodulierten Regelsignals umgerechnet werden, mit dem das Druckregelventil beaufschlagt wird. Mit dem Druckregelventil kann ein durch eine Hydraulikflüssigkeit auf einen Kolben des Zylinders wirkender Druck eingestellt werden. Der Aktor wird dann mit dem Druck beaufschlagt, der dem Regelsignal entspricht. Das Regelsignal repräsentiert daher den Stellwert, mit dem der Aktor beaufschlagt wird.

Prinzipiell ist aber auch eine Ausführungsform mit einem doppelwirkenden Zylinder als Aktor möglich.

Die angehobene Stellung ist bevorzugt eine Vorgewendestellung. Die Erfindung ermöglicht, dass das Absenken aller Arbeitswerkzeuge der landwirtschaftlichen Arbeitsmaschine nach dem Vorgewende unabhängig von ihrer Arbeitsposition etwa dieselbe Zeit benötigt. Dadurch muss der Bediener nicht wie herkömmlich auf das Erreichen der Betriebsstellung von verhältnismäßig weit eingefahrenen Arbeitswerkzeugen warten, wenn demgegenüber stärker ausgefahrene Arbeitswerkzeuge die Betriebsstellung bereits erreicht haben. Die Erfindung ist aber auch auf andere angehobene Stellungen des Arbeitswerkzeugs anwendbar. In Abhängigkeit von einem Schwerpunkt der landwirtschaftlichen Arbeitsmaschine und dem gewählten Aktor ist die Erfindung gegebenenfalls nicht auf eine beim Straßenbetrieb der landwirtschaftlichen Arbeitsmaschine eingenommene Transportstellung anwendbar.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine erfindungsgemäße landwirtschaftliche Arbeitsmaschine in einer perspektivischen Ansicht;
- Fig. 2: in (a) den Ausschnitt aus der landwirtschaftlichen Arbeitsmaschine der Fig. 1 in einer Seitenansicht, wobei ein Arbeitswerkzeug in eine angehobene Vorgewendestellung verschwenkt ist, und zwar sowohl in einer ausgefahrenen als auch in einer eingefahrenen Arbeitsposition, und in (b) das Arbeitswerkzeug der Fig. 2 (a) sowohl in ausgefahrener als auch in eingefahrener Position, jedoch in Betriebsstellung; und
- Fig. 3: schematisch ein Diagramm zur Berechnung eines die Winkelgeschwindigkeit verringernden Stellwertes.

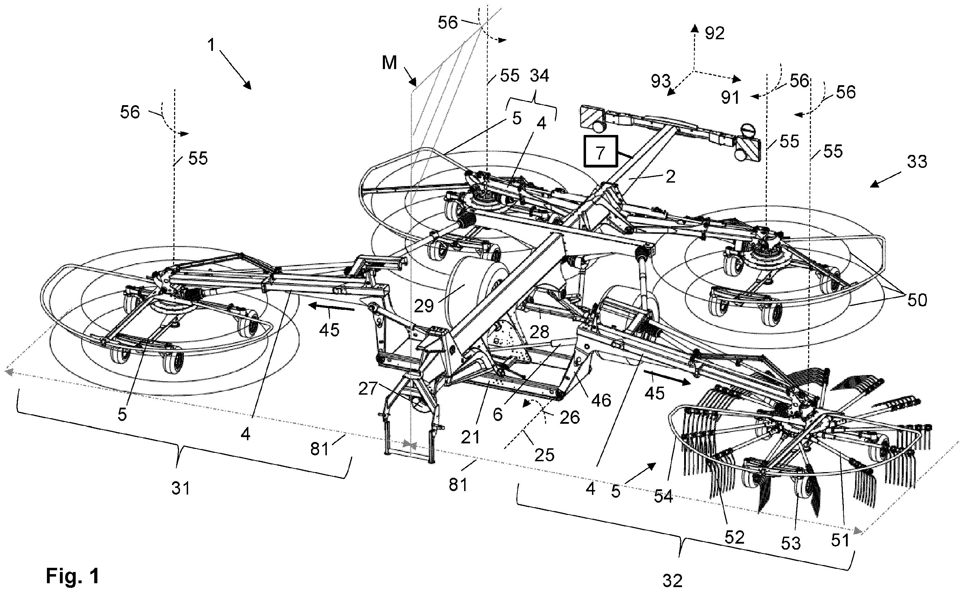

Fig. 1 zeigt eine erfindungsgemäße landwirtschaftliche Arbeitsmaschine 1. Die landwirtschaftliche Arbeitsmaschine 1 ist hier eine Heuwerbungsmaschine, nämlich ein Kreiselschwader. Im Folgenden werden die Begriffe landwirtschaftliche Arbeitsmaschine 1, Heuwerbungsmaschine und Schwader oder Kreiselschwader synonym verwendet. Die Erfindung ist aber nicht auf Schwader beschränkt, sondern auch auf andere landwirtschaftliche Arbeitsmaschinen 1 anwendbar, beispielsweise auf Zettwender oder Mähmaschinen.

Der Schwader 1 ist dafür vorgesehen, mittels einer Zugmaschine (nicht gezeigt) gezogen zu werden. Dafür weist er eine Gegenkupplung 27 auf, mit der er an eine Kupplung der Zugmaschine anhängbar ist.

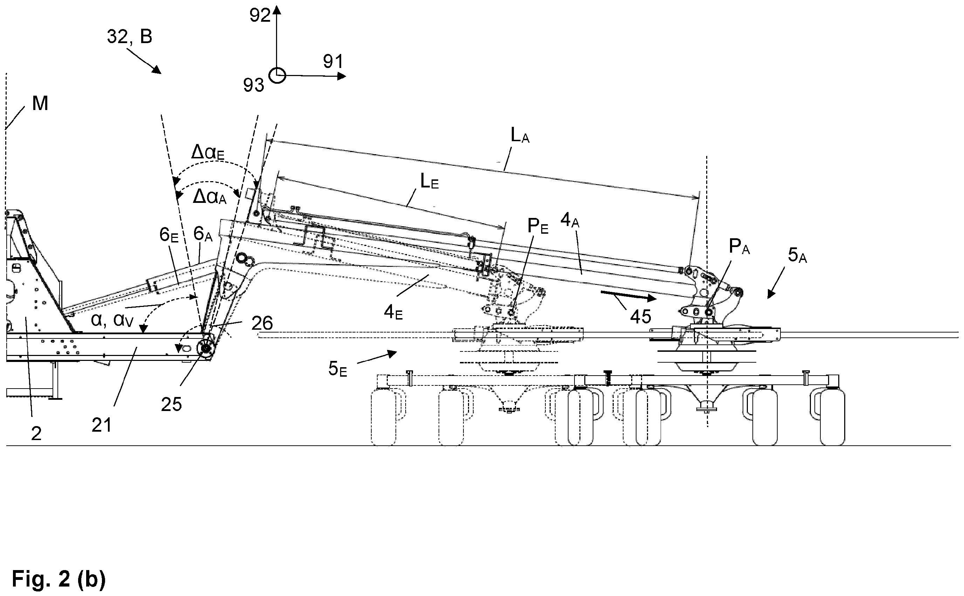

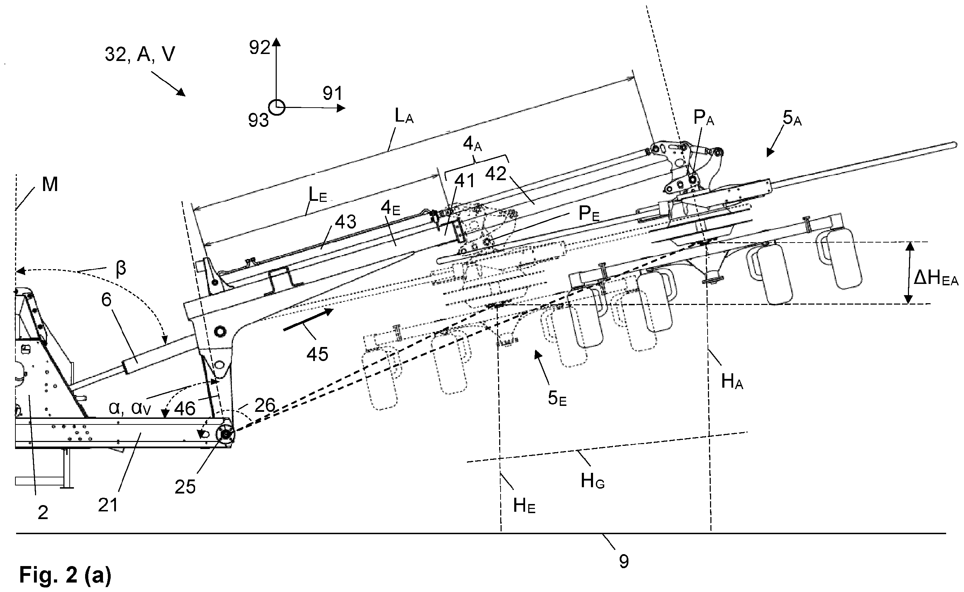

Der Schwader 1 weist einen Rahmen 2 auf, der sich entlang einer Mittelebene M, die durch eine Fahrtrichtung 93 und eine vertikale Richtung 92 aufgespannt ist, erstreckt. Er ist spiegelsymmetrisch zur Mittelebene M aufgebaut. Dabei erstreckt sich die Fahrtrichtung 93 quer zur vertikalen Richtung 92. Am Rahmen 2 ist eine Radachse 28 angeordnet, die sich quer zur Mittelebene M erstreckt, und an der Räder 29 angeordnet sind, die den Rahmen 2 tragen. Mit den Rädern 29 wird der Schwader 1 über den Boden 9 (s. Fig. 2) geführt.

Beidseitig des Rahmens 2 sind jeweils zwei Arbeitsorgane 31 - 34 angeordnet. Die Arbeitsorgane 31 - 34 sind dafür vorgesehen, am Boden 9 liegendes Erntegut wie Heu oder Stroh zu einem Schwad zusammen zuführen. Dafür weisen sie jeweils ein Arbeitswerkzeug 5 auf, das hier als Rechkreisel 5 ausgebildet ist, und das an einem Ausleger 4 befestigt ist. Im Folgenden werden die Begriffe Arbeitswerkzeug 5 und Rechkreisel synonym verwendet.

Dabei sind zwei Arbeitsorgane 31 - 32 in Fahrtrichtung 93 vorne und zwei Arbeitsorgane 33 - 34 in Fahrtrichtung 93 hinten angeordnet. Die beiden in Fahrtrichtung 93 hinten angeordneten Rechkreisel 5 sind näher am Rahmen 2 platziert, als die in Fahrtrichtung 93 vorne angeordneten Rechkreisel 5. Dafür sind die in Fahrtrichtung 93 hinten angeordneten Ausleger 4 kürzer als die in Fahrtrichtung 93 vorne angeordneten Ausleger 4 ausgebildet. Zudem weist der Rahmen 2 in Fahrtrichtung 93 vorne ein Trägerbauteil 21 auf, das sich quer zum Rahmen 2 erstreckt. An offenen Enden (nicht bezeichnet) des Trägerbauteils 21 sind jeweils die in Fahrtrichtung 93 vorne vorgesehenen Arbeitsorgane 31 - 32 angeordnet.

Die in Fahrtrichtung 93 vorne angeordneten Arbeitsorgane 31 - 32 sind jeweils mittels einer Schwinge 46 an einem Ende des Trägerbauteils 21 befestigt. Die Schwinge 46 weist hier eine Erstreckungskomponente (nicht gezeigt) in die vertikale Richtung 92 auf. Zudem weist sie eine Erstreckungskomponente (nicht gezeigt) in eine Längsrichtung 91 auf, die sich quer zur vertikalen Richtung 92 und quer zur horizontalen Richtung 93 erstreckt.

Die Erfindung ist nicht auf solche Vierkreiselschwader beschränkt sondern auch auf Schwader 1 mit mehr oder weniger Rechkreisel 5 anwendbar. Sie umfasst insbesondere auch Schwader 1 mit nur einem einzigen Rechkreisel 5 sowie Schwader 1 mit einer unsymmetrischen Anordnung der Rechkreisel 5.

Um Erntegut zu einem Schwad zusammen führen zu können, sind die Rechkreisel 5 jeweils um eine sich etwa quer zum Boden 9 erstreckende Drehachse 55 in eine Drehrichtung 56 drehbar vorgesehen. Sie weisen dafür zudem gleichmäßig in Drehrichtung 56 verteilt Arme 51 auf, an denen Rechen 52 angeordnet sind. Der Übersichtlichkeit halber sind in der Fig. 1 nur an einem der Rechkreisel 5 die Arme 51 und Rechen 52 dargestellt. Für die übrigen Rechkreisel 5 sind diese lediglich durch Kreise 50 schematisch angedeutet.

Jeder der Rechkreisel 5 weist in Fahrtrichtung 93 vorne einen Schutzbügel 54 auf, der als Stoßschutz dient. Zudem weisen die Rechkreisel 5 hier jeweils vier Tasträder 53 auf, mit denen sie in einer Betriebsstellung B während eines Erntebetriebs bodenkopierend über den Boden 9 geführt sind. Es können aber auch mehr oder weniger Tasträder 53 am Rechkreisel 5 vorgesehen sein.

Die Drehrichtung 56 der Rechkreisel 5 ist so gewählt, dass das Erntegut während des Erntebetriebs in Richtung zur Mittelebene M geschleudert und dort zu einem Schwad gesammelt wird.

Die Ausleger 4 sind jeweils längenveränderlich vorgesehen. Dafür weisen sie jeweils ein Aufnahmerohr 41 (s. Fig. 2 (a)) und einen Auszug 42 (s. Fig. 2 (a)) auf. Dadurch sind sie jeweils von einer eingefahrenen Arbeitsposition P_{E}, in der das am Ausleger 4 angeordnete Arbeitswerkzeug 5 nahe dem Rahmen 2 angeordnet ist, in eine ausgefahrene Arbeitsposition P_{A} ausziehbar, in der das Arbeitswerkzeug 5 gegenüber der eingefahrenen Arbeitsposition P_{E} vom Rahmen 2 weiter entfernt angeordnet ist.

Zum Ausziehen der Ausleger 4 von der eingefahrenen Position P_{E} in die ausgefahrene Position P_{A} weisen die Arbeitsorgane 31 - 34 jeweils einen Verlängerungsaktor 43 auf. Der Verlängerungsaktor 43 ist hier jeweils als Hydraulikzylinder ausgebildet. Er kann aber auch als Spindel oder Linearmotor ausgebildet sein.

Mit dem Verlängerungsaktor 43 ist der Ausleger 4 des jeweiligen Arbeitsorgans 31 - 34 von der eingefahrenen Position P_{E} in Ausziehrichtung 45 in die ausgefahrene Position P_{A} und zurück verfahrbar. Dabei verlängert sich eine Länge L_{E}, L_{A} des Auslegers 4 kontinuierlich von einer eingezogenen Länge L_{E} um den ausgezogenen Teil (nicht bezeichnet) des Auszugs 42 zu einer ausgezogenen Länge L_{A}. Ein Abstand (nicht bezeichnet) des Arbeitswerkzeugs 5 vom Rahmen 2 vergrößert sich dabei um diesen Teil. Er ist in der ausgezogenen Arbeitsposition P_{A} um eine Differenz zwischen der ausgezogenen Länge L_{A} des Auslegers 4 und der eingezogenen Länge L_{E} des Auslegers 4 vergrößert. Sichtbar ist, dass sich durch Ausfahren eines der Rechkreisel 5 eine Arbeitsbreite 81 des Schwaders 1 von der Mittelebene M bis zu einem äußeren Ende (nicht bezeichnet) dieses Rechkreisels 5 vergrößert.

Die Ausleger 4 sind zudem jeweils mittels eines Aktors 6 um eine Schwenkachse 25 in und gegen eine Schwenkrichtung 26 verschwenkbar. Die Schwenkachse 25 erstreckt sich jeweils in Fahrtrichtung 93. Durch Verschwenken der Ausleger 4 um die Schwenkachse 25 sind die Rechkreisel 5 reversibel von der Betriebsstellung B in eine angehobene Stellung A anhebbar.

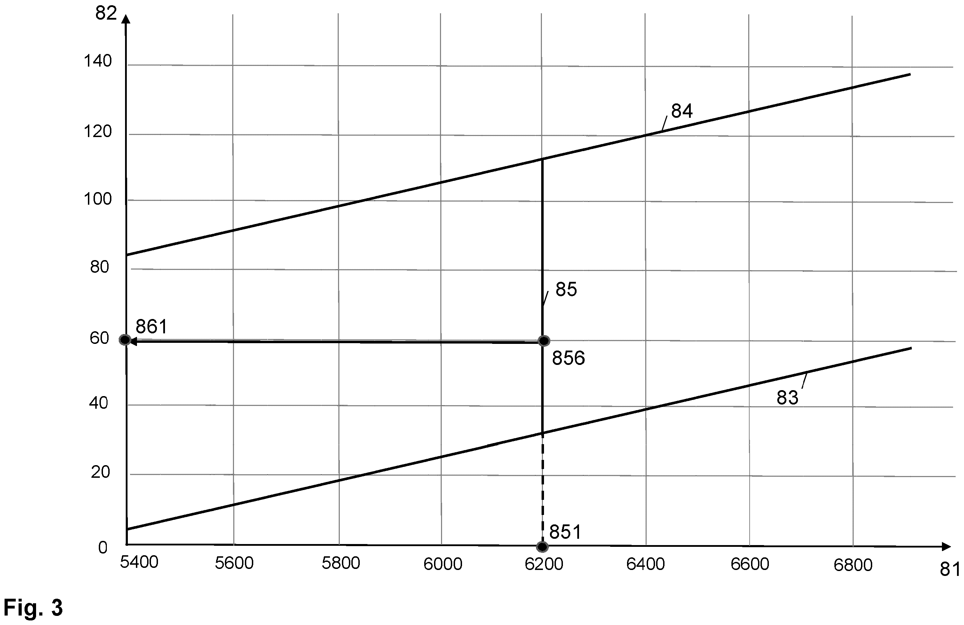

Der Schwader 1 weist weiterhin eine Auswerte- und Steuerungseinheit 7 auf, mit der ein Absenken des Arbeitswerkzeugs 5 von der angehobenen Stellung A in die Betriebsstellung B steuer- oder regelbar ist. Dies wird im Folgenden anhand der Fig. 2 und 3 beschrieben.

Fig. 2 zeigt in (a) und (b) jeweils einen Ausschnitt aus dem Schwader 1 der Fig. 1. Dargestellt ist jeweils das in Längsrichtung 91 rechte und in Fahrtrichtung 93 vorne angeordnete Arbeitsorgan 32 bis zur Mittelebene M. Die folgende Beschreibung gilt aber für die übrigen Arbeitsorgane 31, 33, 34 des Schwaders 1 in analoger Art und Weise.

Fig. 2 (a) zeigt das Arbeitsorgan 32 sowohl in eingefahrener Arbeitsposition P_{E} mit gestrichelten Linien als auch in ausgefahrener Arbeitsposition P_{A} mit durchgezogenen Linien in der angehobenen Stellung A. Fig. 2 (b) zeigt das Arbeitsorgan 32 sowohl in eingefahrener Arbeitsposition P_{E} mit gestrichelten Linien als auch in ausgefahrener Arbeitsposition P_{A} mit durchgezogenen Linien in der Betriebsstellung B.

In beiden Figuren sind die Bezugszeichen der Bauteile 4, 4_{A}, 4_{E}, 5, 5_{A}, 5_{E}, 6, 6_{A}, 6_{E} des Arbeitsorgans 32, deren Arbeitsposition P_{E}, P_{A} sich durch das Ausziehen des Auslegers 4, 4_{E}, 4_{A} ändern, durch den Buchstaben E bei eingefahrener Arbeitsposition P_{E} und durch den Buchstaben A bei ausgezogener Arbeitsposition P_{A} gekennzeichnet.

In Fig. 2 (a) ist das Arbeitswerkzeug 5 sowohl in der eingefahrenen Arbeitsposition P_{E} als auch in der ausgefahrenen Arbeitsposition P_{A} um einen Schwenkwinkel α, α_{V} in eine Schwenkrichtung 26 um die Schwenkachse 25 verschwenkt. Das Arbeitswerkzeug 5 befindet sich daher in beiden Arbeitspositionen P_{E}, P_{A} in einer angehobenen Stellung A. Es handelt sich dabei um eine Vorgewendestellung V. Die Vorgewendestellung V wird genutzt, um bei einem Wenden der landwirtschaftlichen Arbeitsmaschine 1 einen bereits fertig bearbeiteten Schwad nicht ungewollt erneut zu bearbeiten.

In der Vorgewendestellung V ist ein Winkel β zwischen dem Ausleger 4 und dem Rahmen 2 in beiden Arbeitspositionen P_{E}, P_{A} gleich. Eine Höhe H_{E} des Arbeitswerkzeugs 5 ist in der eingefahrenen Arbeitsposition P_{E} gegenüber der Höhe H_{A} des Arbeitswerkzeugs 5 in der ausgefahrenen Arbeitsposition P_{A} um eine Differenz ΔH_{EA}, die durch die Länge L_{A} - L_{E} des ausgefahrenen Teils des Auszugs 42 des Auslegers 4 bestimmt ist, geringer.

Die Rechkreisel 5 werden im Vorgewende, das heißt während des Wendens, vom Boden 9 in die Vorgewendestellung V angehoben. Nach dem Wenden sollen sie möglichst schnell wieder abgesenkt werden. Dabei soll eine Geschwindigkeit zum Absenken des Rechkreisels 5 möglichst unabhängig von der Arbeitsposition P_{E}, P_{A} des Rechkreisels 5 immer gleich sein.

Dafür weist der Schwader 1 die Auswert- und Steuerungseinheit 7 auf. Die Auswert- und Steuerungseinheit 7 ist dafür vorgesehen, die Höhe H_{E}, H_{A} des Arbeitswerkzeugs 5 zu erfassen, eine Winkelgeschwindigkeit des Auslegers 4 beim Verschwenken um die Schwenkachse 25 durch Beaufschlagen des Aktors 6 mit einem Stellwert 82 (s. Fig. 3) zu steuern, und den Aktor 6 beim Absenken des Arbeitswerkzeugs 5 von der angehobenen Stellung A, hier der Vorgewendestellung V, in die Betriebsstellung B fortlaufend oder ab Erreichen einer Grenzhöhe H_{G} mit einem die Winkelgeschwindigkeit verringernden Stellwert 861 zu beaufschlagen. Da die Auswert- und Steuerungseinheit 7 Einfluss auf die Winkelgeschwindigkeit beim Verschwenken des Arbeitsorgans 32 nimmt, kann die zum Absenken des Rechkreisels 5 benötigte Zeit unabhängig von der Arbeitsposition P_{E}, P_{A} des Arbeitswerkzeugs 5, d. h. unabhängig von der Länge L_{E}, L_{A} des Auslegers 4, im Wesentlichen gleich eingestellt werden.

Als Aktor 6 ist hier ein hydraulischer Zylinder gewählt. Im Folgenden werden daher die Begriffe Aktor 6, Zylinder und Hydraulikzylinder synonym verwendet. Der Zylinder 6 ist einfachwirkend ausgebildet. Der Aktor 6 wird mit dem die Winkelgeschwindigkeit verringernden Stellwert 861 beaufschlagt, indem ein Stellmittel (nicht gezeigt) wie beispielsweise ein Druckregelventil, welches ein Teil der Auswert- und Steuerungseinheit 7 ist, mit einem pulsweitenmodulierten Regelsignal (nicht gezeigt) beaufschlagt wird. Die Pulsweite des Regelsignals entspricht dabei dem die Winkelgeschwindigkeit verringernden Stellwert 861. Dadurch wird ein Druck, mit dem eine Hydraulikflüssigkeit auf einen Kolben (nicht bezeichnet) des Zylinders 6 wirkt, eingestellt.

Die Höhe H_{E}, H_{A} des Arbeitswerkzeugs 5 wird hier mittels eines Schwenkwinkels α, α_{V}, um den das Arbeitswerkzeug 5 gegenüber dem Rahmen 2 um die Schwenkachse 25 verschwenkt ist, bestimmt. In Fig. 2 (a) ist der Schwenkwinkel α, α_{V} in der Vorgewendestellung V sowohl für die eingefahrene Arbeitsposition P_{E} als auch für die ausgefahrene Arbeitsposition P_{A} gleich. Da die Höhe H_{E}, H_{A} des Arbeitswerkzeugs 4 bei gleichem Winkel β zwischen dem Ausleger 4 und dem Rahmen 2 abhängig von der Länge L_{E}, L_{A} des Auslegers 4, das heißt von der Arbeitsposition P_{E}, P_{A} ist, wird zudem die Länge L_{E}, L_{A} des Auslegers 4 erfasst. Aus diesen Werten wird die Höhe H_{E}, H_{A} des Arbeitswerkzeugs 5 von der Auswert- und Steuerungseinheit 7 berechnet. Für die Erfassung des Schwenkwinkels α sowie der Arbeitsposition P_{E}, P_{A} werden herkömmliche Sensoren (nicht gezeigt) verwendet.

Das dargestellte Ausführungsbeispiel sieht vor, den Rechkreisel 5 bis zum Erreichen einer Grenzhöhe H_{G} ungedämpft abzusenken. Erst danach wird der Rechkreisel 5 durch Beaufschlagen des Aktors 6 mit dem die Winkelgeschwindigkeit verringernden Stellwert 861 gebremst. Dadurch kann der Rechkreisel 5 zunächst schnell absinken und die Zeit zum Absenken des Rechkreisels 5 ist optimiert.

Dabei ist die Grenzhöhe H_{G} für den in der eingefahrenen Arbeitsposition P_{E} befindlichen Rechkreisel 5 niedriger vorgesehen, als für den in der ausgefahrenen Arbeitsposition P_{A} befindlichen Rechkreisel 5. Dadurch kann der in der eingefahrenen Arbeitsposition P_{E} befindliche Rechkreisel 5 gegenüber dem in der ausgefahrenen Arbeitsposition P_{A} befindlichen Rechkreisel 5 länger schneller absinken. Daher kann ein bei eingefahrener Arbeitsposition P_{E} gegenüber der ausgefahrenen Arbeitsposition P_{A} größerer Schwenkwinkel α (s. Fig. 2 (b)) ausgeglichen werden. Da ein hydraulischer Zylinder als Aktor 6 genutzt wird, kann auch eine bei eingefahrener Arbeitsposition P_{E} gegenüber der ausgefahrenen Arbeitsposition P_{A} geringere Hebelwirkung des Auslegers 4 beim Zurückdrücken der Hydraulikflüssigkeit aus dem Zylinder 6 dadurch ausgeglichen werden.

Im dargestellten Ausführungsbeispiel steigt die Grenzhöhe H_{G}, je weiter der Ausleger 4 ausgefahren ist, linear an. Konstruktionsbedingt kann aber auch ein anderer Verlauf der Grenzhöhe H_{G} vorgesehen sein.

Erst nach Erreichen der Grenzhöhe H_{G} wird die Winkelgeschwindigkeit, mit der das Arbeitsorgan 32 von der Vorgewendestellung V in die Betriebsstellung B abgesenkt wird, mit dem die Winkelgeschwindigkeit verringernden Stellwert 861 gedämpft. Dabei ist vorgesehen, dass auch der die Winkelgeschwindigkeit verringernde Stellwert 861 von der Auswert- und Steuerungseinheit 7 abhängig von der Arbeitsposition P_{E}, P_{A} berechnet wird. Der die Winkelgeschwindigkeit verringernde Stellwert 861 ist von der Länge L_{E}, L_{A} des Auslegers 4 abhängig. Dadurch kann der Rechkreisel 5 in der eingefahrenen Arbeitsposition P_{E} bei Erreichen der Grenzhöhe H_{G} stärker abgebremst werden als in der ausgefahrenen Arbeitsposition P_{A}. Obwohl der Rechkreisel 5 bei eingefahrener Arbeitsposition P_{E} daher länger schneller absinkt, wird so ein dennoch sachtes Erreichen der Betriebsstellung B des Rechkreisels 5 ermöglicht, bei dem der Rechkreisel 5 und/oder eine Grasnarbe nicht beschädigt werden.

In Fig. 2 (b) ist jeweils eine Differenz des Schwenkwinkels Δα_{E}, Δα_{A}, den das Arbeitsorgan 32 beim Verschwenken von der angehobenen Stellung A (s. Fig. 2 (a)) in die Betriebsstellung B verschwenkt werden muss, sowohl für die eingefahrenen Position P_{E} des Arbeitswerkzeugs 5_{E} als auch für die ausgefahrene Position P_{A} des Arbeitswerkzeugs 5_{A} schematisch gezeigt.

Der die Winkelgeschwindigkeit verringernde Stellwert 861 kann, beispielsweise durch den Bediener, einstellbar sein. Eine mögliche Berechnung eines solchen von einem Bediener eingestellten, die Winkelgeschwindigkeit verringernden Stellwerts 861 zeigt Fig. 3 beispielhaft. Der hier berechnete, die Winkelgeschwindigkeit verringernde Stellwert 861 wird für eine Steuerung der Winkelgeschwindigkeit, mit dem der Ausleger 4 um die Schwenkachse 25 geschwenkt wird, beim Verschwenken des Arbeitsorgans 31 - 34 von der Vorgewendestellung V in die Betriebsstellung B genutzt.

Dargestellt ist hier in einem kartesischen Koordinatensystem auf einer Hypotenuse die Arbeitsbreite 81 des Schwaders 1, und auf einer Abszisse der Stellwert 82 für ein pulsweitenmoduliertes Regelsignal eines Druckregelventils.

Eine untere Gerade 83 stellt eine Untergrenze für eine Gewichtung dar, mit der ein voreingestellter Stellwert 82 für das pulsweitenmodulierte Regelsignal gewichtet werden kann, um die Winkelgeschwindigkeit beim Absenken des Rechkreisels 5 zu verändern. Diese Gerade 83 entspricht einer Gewichtung von 0%.

Eine obere Gerade 84 stellt demgegenüber eine Obergrenze für die Gewichtung dar und entspricht daher dem Wert 100%.

Die Steuerung sieht hier einen mit der Arbeitsbreite 81 linear steigenden, die Winkelgeschwindigkeit verringernden Stellwert 82 für das pulsweitenmodulierte Regelsignal vor.

Der aktuell relevante Stellwert 82 für das pulsweitenmodulierte Regelsignal entspricht einem Wert 856, der auf einer parallel zur Abszisse verlaufenden Linie 85 angeordnet ist, die durch den der aktuellen Arbeitsbreite 81 des Schwaders 1 entsprechenden Wert 851 auf der Hypotenuse verläuft. Er wird ermittelt, indem der auf der parallel zur Abszisse verlaufenden Linie 85 liegende Wert 851 auf die Abszisse übertragen wird.

Im dargestellten Ausführungsbeispiel beträgt die eingestellte Gewichtung ca. 35%. Die Arbeitsbreite 81 des Schwaders 1 liegt bei 6200mm und der aktuell relevante Stellwert 82 für das pulsweitenmodulierte Regelsignal liegt bei 60. Dieser Wert entspricht dem die Winkelgeschwindigkeit verringernden Stellwert 861, da mit ihm der Druck, mit dem die Hydraulikflüssigkeit auf einen Kolben des Zylinders 6 wirkt, eingestellt wird.

Die Steuerung kann weitere Einflussfaktoren berücksichtigen, wie beispielsweise die aktuelle Fahrgeschwindigkeit des Schwaders 1 oder einen Neigungswinkel bei Hanglage. Anstelle einer Steuerung kann auch eine Regelung der Winkelgeschwindigkeit vorgesehen sein.

Alternativ zu der hier vorgestellten Berechnung des die Winkelgeschwindigkeit verringernden Stellwerts 861 kann die landwirtschaftliche Arbeitsmaschine 1 auch einen Regelkreis (nicht gezeigt) zum Regeln des die Winkelgeschwindigkeit verringernden Stellwerts 861 aufweisen. Dabei kann die Auswert- und Steuerungseinheit 7 dazu ausgebildet sein, den die Winkelgeschwindigkeit verringernden Stellwert 861 und/oder die Grenzhöhe H_{G} abhängig von einer aktuellen Winkelgeschwindigkeit zu regeln. In dieser Ausführungsform wird die Intensität geregelt, mit der die Winkelgeschwindigkeit, mit der das Arbeitsorgan 31 - 34 von der Vorgewendestellung V in die Betriebsstellung B verschwenkt wird, gedämpft wird.

## Patentansprüche

1. Landwirtschaftliche Arbeitsmaschine (1) zum frontseitigen oder heckseitigen Anordnen an ein Zugfahrzeug, mit einem Rahmen (2), an dem mindestens ein Arbeitsorgan (31 - 34) angeordnet ist, das einen Ausleger (4) und ein Arbeitswerkzeug (5) umfasst, wobei das Arbeitswerkzeug (5) an dem Ausleger (4) angeordnet ist, und der Ausleger (4) längenveränderlich ist, so dass eine Arbeitsposition (P_{E}, P_{A}) des Arbeitswerkzeugs (5) gegenüber dem Rahmen (2) von einer eingefahrenen Arbeitsposition (P_{E}) in eine ausgefahrene Arbeitsposition (P_{A}) veränderbar ist, wobei der Ausleger (4) mit einem Aktor (6) um eine Schwenkachse (25) in und gegen eine Schwenkrichtung (26) verschwenkbar ist, so dass das Arbeitswerkzeug (5) reversibel von einer Betriebsstellung (B) in eine angehobene Stellung (A) anhebbar ist, wobei die Arbeitsmaschine (1) einen Sensor zur Erfassung einer Höhe (H_{E}, H_{A}) des mindestens einen Arbeitswerkzeugs (5) sowie eine Auswert- und Steuerungseinheit (7) zum Steuern des Aktors (6) umfasst, wobei die Auswert- und Steuerungseinheit (7) dazu ausgebildet ist,
• die Höhe (H_{E}, H_{A}) des mindestens einen Arbeitswerkzeugs (5) zu erfassen,
• eine Winkelgeschwindigkeit des Auslegers (4) beim Verschwenken um die Schwenkachse (25) durch Beaufschlagen des Aktors (6) mit einem Stellwert (82) zu steuern, und
• den Aktor (6) beim Absenken des mindestens einen Arbeitswerkzeugs (5) von der angehobenen Stellung (A) in die Betriebsstellung (B) fortlaufend oder ab Erreichen einer Grenzhöhe (H_{G}) mit einem die Winkelgeschwindigkeit verringernden Stellwert (861) zu beaufschlagen,
wobei die landwirtschaftliche Arbeitsmaschine (1) einen Sensor zur Erfassung der Arbeitsposition (P_{E}, P_{A}) des Arbeitswerkzeugs (5) umfasst, und die Auswert- und Steuerungseinheit (7) dazu ausgebildet ist, die Arbeitsposition (P_{E}, P_{A}) des Arbeitswerkzeugs (5) zu erfassen,
**dadurch gekennzeichnet, dass**
die Auswert- und Steuerungseinheit (7) dazu ausgebildet ist, den die Winkelgeschwindigkeit verringernden Stellwert (861) und/oder die Grenzhöhe (H_{G}) abhängig von der Arbeitsposition (P_{E}, P_{A}) des Arbeitswerkzeugs (5) einzustellen, so dass die benötigte Zeit zum Absenken des Arbeitswerkzeugs (5) unabhängig von der Arbeitsposition (P_{E}, P_{A}) des Arbeitswerkzeugs (5) im Wesentlichen gleich ist.

2. Landwirtschaftliche Arbeitsmaschine (1) nach Anspruch 1, **dadurch gekennzeichnet, dass** die Grenzhöhe (H_{G}) in der eingefahrenen Arbeitsposition (P_{E}) bodennäher als in der ausgefahrenen Arbeitsposition (P_{A}) ist.

3. Landwirtschaftliche Arbeitsmaschine (1) nach einem der vorherigen Ansprüche, **dadurch gekennzeichnet, dass** der die Winkelgeschwindigkeit verringernde Stellwert (861) ein konstanter Wert ist.

4. Landwirtschaftliche Arbeitsmaschine (1) nach einem der Ansprüche 1 - 2, **dadurch gekennzeichnet, dass** sie einen Regelkreis zum Regeln des die Winkelgeschwindigkeit verringernden Stellwerts (861) umfasst.

5. Landwirtschaftliche Arbeitsmaschine (1) nach einem der Ansprüche 1 - 2, **dadurch gekennzeichnet, dass** die Auswert- und Steuerungseinheit (7) dazu ausgebildet ist, den die Winkelgeschwindigkeit verringernden Stellwert (861) und/oder die Grenzhöhe (H_{G}) abhängig von einer aktuellen Winkelgeschwindigkeit des Arbeitswerkzeugs (5) zu steuern oder zu regeln.

6. Landwirtschaftliche Arbeitsmaschine (1) nach einem der vorherigen Ansprüche, **dadurch gekennzeichnet, dass** die Auswert- und Steuerungseinheit (7) dazu ausgebildet ist, den die Winkelgeschwindigkeit verringernden Stellwert (861) und/oder die Grenzhöhe (H_{G}) abhängig von einer Fahrgeschwindigkeit der landwirtschaftlichen Arbeitsmaschine (1) einzustellen.

7. Landwirtschaftliche Arbeitsmaschine (1) nach einem der vorherigen Ansprüche, **dadurch gekennzeichnet, dass** sie zumindest zwei Arbeitsorgane (31 - 34) umfasst, die an gegenüberliegenden Seiten des Rahmens (2) angeordnet sind, und dass die Auswert- und Steuerungseinheit (7) dazu ausgebildet ist, den die Winkelgeschwindigkeit verringernden Stellwert (861) und/oder die Grenzhöhe (H_{G}) abhängig von einem Neigungswinkel der landwirtschaftlichen Arbeitsmaschine (1) einzustellen.

8. Landwirtschaftliche Arbeitsmaschine (1) nach Anspruch 7, **dadurch gekennzeichnet, dass** der die Winkelgeschwindigkeit verringernde Stellwert (861) und/oder die Grenzhöhe (H_{G}) für jedes der Arbeitsorgane (31 - 34) unterschiedlich ist.

9. Landwirtschaftliche Arbeitsmaschine (1) nach einem der vorherigen Ansprüche, **dadurch gekennzeichnet, dass** der die Winkelgeschwindigkeit verringernde Stellwert (861) einstellbar ist.

10. Landwirtschaftliche Arbeitsmaschine (1) nach Anspruch 8, **dadurch gekennzeichnet, dass** die Auswert- und Steuerungseinheit (7) ein Stellmittel zum Beaufschlagen des Aktors (6) mit dem die Winkelgeschwindigkeit verringernden Stellwert (861) umfasst.

11. Landwirtschaftliche Arbeitsmaschine (1) nach Anspruch 8, **dadurch gekennzeichnet, dass** die Höhe (H_{A}, H_{E}) anhand eines Winkels (α, α_{V}), um den der Ausleger (4) gegenüber dem Rahmen (2) um die Schwenkachse (25) verschwenkt ist, sowie einer Länge (L_{A}, L_{E}) des Auslegers (4) erfasst wird.

12. Landwirtschaftliche Arbeitsmaschine (1) nach einem der vorherigen Ansprüche, **dadurch gekennzeichnet, dass** der Aktor (6) ein Linearaktor, insbesondere ein hydraulischer oder elektrohydraulischer Zylinder, oder ein Linearmotor, ist.

13. Landwirtschaftliche Arbeitsmaschine (1) nach einem der vorherigen Ansprüche, **dadurch gekennzeichnet, dass** der die Winkelgeschwindigkeit verringernde Stellwert (861) ein elektrischer oder hydraulischer Stellwert ist.

14. Landwirtschaftliche Arbeitsmaschine (1) nach einem der vorherigen Ansprüche, **dadurch gekennzeichnet, dass** die angehobene Stellung (A) eine Vorgewendestellung (V) ist.

## Claims

1. Agricultural working machine (1) for arrangement on the front or rear side of a towing vehicle, comprising a frame (2) on which at least one working element (31 - 34) is arranged which comprises a boom (4) and a working tool (5), the working tool (5) being arranged on the boom (4) and the boom (4) being variable in length such that a working position (P_{E}, P_{A}) of the working tool (5) can be changed from a retracted working position (P_{E}) to an extended working position (P_{A}) relative to the frame (2), the boom (4) being pivotable by an actuator (6) about a pivot axis (25) in and against a pivoting direction (26) such that the working tool (5) can be reversibly lifted from an operating position (B) into a raised position (A), the working machine (1) comprising a sensor for detecting a height (H_{E}, H_{A}) of the at least one working tool (5) as well as an evaluation and control unit (7) for controlling the actuator (6), the evaluation and control unit (7) being designed to
• detect the height (H_{E}, H_{A}) of the at least one working tool (5),
• control an angular speed of the boom (4) during pivoting about the pivot axis (25) by applying an actuating value (82) to the actuator (6), and
• apply, continuously or after reaching a limit height (H_{G}), an actuating value (861) to the actuator (6) when the at least one working tool (5) is lowered from the raised position (A) to the operating position (B), which value reduces the angular speed,
the agricultural working machine (1) comprising a sensor for detecting the working position (P_{E}, P_{A}) of the working tool (5) and the evaluation and control unit (7) being designed to detect the working position (P_{E}, P_{A}) of the working tool (5),
**characterized in that**
the evaluation and control unit (7) is designed to adjust the actuating value (861) that reduces the angular speed, and/or the limit height (H_{G}), on the basis of the working position (P_{E}, P_{E}) of the working tool (5) such that the time required for lowering the working tool (5) independently of the working position (P_{E}, P_{A}) of the working tool (5) is substantially the same.

2. Agricultural working machine (1) according to claim 1, **characterized in that** the limit height (H_{G}) in the retracted working position (P_{E}) is closer to the ground than in the extended working position (P_{A}).

3. Agricultural working machine (1) according to any of the preceding claims, **characterized in that** the actuating value (861) that reduces the angular speed is a constant value.

4. Agricultural working machine (1) according to either of claims 1 and 2, **characterized in that** it comprises a regulating loop for regulating the actuating value (861) that reduces the angular speed.

5. Agricultural working machine (1) according to either of claims 1 and 2, **characterized in that** the evaluation and control unit (7) is designed to control or regulate the actuating value (861) that reduces the angular speed, and/or the limit height (H_{G}), on the basis of a current angular speed of the working tool (5).

6. Agricultural working machine (1) according to any of the preceding claims, **characterized in that** the evaluation and control unit (7) is designed to adjust the actuating value (861) that reduces the angular speed, and/or the limit height (H_{G}), on the basis of a driving speed of the agricultural working machine (1).

7. Agricultural working machine (1) according to any of the preceding claims, **characterized in that** it comprises at least two working members (31 - 34) arranged on opposite sides of the frame (2), and **in that** the evaluation and control unit (7) is designed to adjust the actuating value (861) that reduces the angular speed, and/or the limit height (H_{G}), on the basis of an angle of inclination of the agricultural working machine (1).

8. Agricultural working machine (1) according to claim 7, **characterized in that** the actuating value (861) that reduces the angular speed, and/or the limit height (H_{G}), is different for each of the working members (31 - 34).

9. Agricultural working machine (1) according to any of the preceding claims, **characterized in that** the actuating value (861) that reduces the angular speed is adjustable.

10. Agricultural working machine (1) according to claim 8, **characterized in that** the evaluation and control unit (7) comprises an actuating means for applying the actuating value (861) which reduces the angular speed to the actuator (6).

11. Agricultural working machine (1) according to claim 8, **characterized in that** the height (H_{A}, H_{E}) is detected based on an angle (α, α_{V}) about which the boom (4) is pivoted relative to the frame (2) about the pivot axis (25), and on a length (L_{A}, L_{E}) of the boom (4).

12. Agricultural working machine (1) according to any of the preceding claims, **characterized in that** the actuator (6) is a linear actuator, in particular a hydraulic or electrohydraulic cylinder, or a linear motor.

13. Agricultural working machine (1) according to any of the preceding claims, **characterized in that** the actuating value (861) that reduces the angular speed is an electrical or hydraulic actuating value.

14. Agricultural working machine (1) according to any of the preceding claims, **characterized in that** the raised position (A) is a headland position (V).

## Revendications

1. Machine agricole (1) destinée à être installée à l'avant ou à l'arrière d'un véhicule tracteur, comprenant un châssis (2) équipé d'au moins un organe de travail (31-34), comprenant un bras (4) et un outil (5),
- l'outil (5) étant installé sur le bras (4) de longueur réglable de façon à pouvoir modifier la position de travail (P_{E}, P_{A}) de l'outil (5) par rapport au châssis (2) entre une position de travail rentrée (P_{E}) et une position de travail déployée (P_{A}),
- le bras (4) étant pivoté par un actionneur (6) autour d'un axe de basculement (25) selon une direction de basculement (26) et la direction opposée pour que l'outil (5) puisse être relevé de manière réversible d'une position de fonctionnement (B) à une position relevée (A),
- la machine (1) ayant un capteur pour saisir une hauteur (H_{E}, H_{A}) de cet outil (5) ainsi qu'une unité d'exploitation et de commande (7) pour commander l'actionneur (6),
l'unité d'exploitation et de commande (7) étant conçue pour :
* saisir la hauteur (H_{E}, H_{A}) d'au moins un outil (5),
* commander la vitesse angulaire du bras (4) lors du basculement autour de l'axe de basculement (25) en appliquant à l'actionneur (6) une valeur de réglage (82), et
lors de l'abaissement de l'outil (5) de sa position relevée (A) à sa position de fonctionnement (B), de façon continue ou après avoir atteint une hauteur limite (H_{G}) solliciter l'actionneur (6) avec une valeur de réglage (861) réduisant la vitesse angulaire,
- la machine agricole (1) comportant un capteur pour saisir la position de travail (P_{E}, P_{A}) de l'outil (5) et l'unité d'exploitation et de commande (7) est conçue pour saisir la position de travail (P_{E}, P_{A}) de l'outil (5),
machine agricole **caractérisée en ce que**
l'unité d'exploitation et de commande (7) est conçue pour régler la valeur de réglage (861) réduisant la vitesse angulaire et/ou la hauteur limite (H_{G}) en fonction de la position de travail (P_{E}, P_{A}) de l'outil (5) de façon que le temps nécessaire à l'abaissement de l'outil (5) soit pratiquement le même indépendamment de la position de travail (P_{E}, P_{A}) de l'outil (5).

2. Machine agricole (1) selon la revendication 1,
**caractérisée en ce que**
la hauteur limite (H_{G}) en position de travail, rentrée (P_{E}) est plus proche du sol que dans la position de travail déployée (P_{A}).

3. Machine agricole (1) selon l'une des revendications précédentes,
**caractérisée en ce que**
la valeur de réglage (861) réduisant la vitesse angulaire est une valeur constante.

4. Machine agricole (1) selon l'une des revendications 1 et 2,
**caractérisée en ce qu'**elle a
une boucle de régulation pour réguler la valeur de réglage (861) réduisant la vitesse angulaire.

5. Machine agricole (1) selon l'une des revendications 1 et 2,
**caractérisée en ce que**
l'unité d'exploitation et de commande (7) est conçue pour commander ou réguler la valeur de réglage (861) réduisant la vitesse angulaire et/ou la hauteur limite (H_{G}) en fonction de la vitesse angulaire actuelle de l'outil (5).

6. Machine agricole (1) selon l'une des revendications précédentes,
**caractérisée en ce que**
l'unité d'exploitation et de commande (7) est conçue pour régler la valeur de réglage (861) réduisant la vitesse angulaire et/ou la hauteur limite (H_{G}) en fonction de la vitesse de circulation de la machine agricole (1).

7. Machine agricole (1) selon l'une des revendications précédentes,
**caractérisée en ce qu'**elle comprend
au moins deux organes de travail (31-34) installés sur les côtés opposés du châssis (2), et
l'unité d'exploitation et de commande (7) est conçue pour régler la valeur de réglage (861) réduisant la vitesse angulaire et/ou la hauteur limite (H_{G}) en fonction de l'angle d'inclinaison de la machine agricole (1).

8. Machine agricole (1) selon la revendication 7,
**caractérisée en ce que**
la valeur de réglage (861) réduisant la vitesse angulaire et/ou la hauteur limite (H_{G}) sont différentes pour chacun des organes de travail (31-34).

9. Machine agricole (1) selon l'une des revendications précédentes,
**caractérisée en ce que**
la valeur de réglage (861) réduisant la vitesse angulaire est réglable.

10. Machine agricole (1) selon la revendication 8,
**caractérisée en ce que**
l'unité d'exploitation et de commande (7) comprend un moyen de réglage pour solliciter l'actionneur (6) avec la valeur de réglage (861) réduisant la vitesse angulaire.

11. Machine agricole (1) selon la revendication 8,
**caractérisée en ce que**
la hauteur (H_{A}, H_{E}) est saisie par l'angle (α, αv) selon lequel le bras (4) est basculé par rapport au châssis (2) autour de l'axe de basculement (25) et par la longueur (L_{A}, L_{E}) du bras (4).

12. Machine agricole (1) selon l'une des revendications précédentes,
**caractérisée en ce que**
l'actionneur (6) est un actionneur linéaire notamment un vérin hydraulique ou électrohydraulique ou un moteur linéaire.

13. Machine agricole (1) selon l'une des revendications précédentes,
**caractérisée en ce que**
la valeur de réglage (861) réduisant la vitesse angulaire est une valeur de réglage électrique ou hydraulique.

14. Machine agricole (1) selon l'une des revendications précédentes,
**caractérisée en ce que**
la position relevée (A) est une position avant retournement (V).
